# EUROPÄISCHE PATENTSCHRIFT

(11) **EP 1 790 961 B1**
(45) Veröffentlichungstag und Bekanntmachung des Hinweises auf die Patenterteilung: **09.02.2011**
(21) Anmeldenummer: 06024181.7
(22) Anmeldetag: 22.11.2006
(51) Int. Cl.: G01J 5/38

(54) **Infrarot-Mikrosensor**
Infrared microsensor
Microcapteur à infrarouge

(30) Priorität: 25.11.2005 DE 102005056596; 16.01.2006 DE 102006002177
(43) Veröffentlichungstag der Anmeldung: 30.05.2007
(73) Patentinhaber: Rheinische Friedrich-Wilhelms-Universität Bonn, 53113 Bonn (DE)
(72) Erfinder: Schmitz, Helmut Dr., 53913 Swisttal-Buschhoven (DE); Mürtz, Manfred Dr., 53121 Bonn (DE); Löhndorf, Markus Dr., 81739 München (DE); Tewes, Michael Dr., 53332 Roisdorf (DE); Bleckmann, Horst Prof. Dr., 53347 Alfter-Witterschlick (DE)
(74) Vertreter: Braun-Dullaeus, Karl-Ulrich

(56) Entgegenhaltungen:
- DE-A1- 19 718 732
- GB-A- 1 111 712
- US-A- 4 788 428
- KENNY T W ET AL: "MICROMACHINED INFRARED SENSORS USING TUNNELING DISPLACEMENT TRANSDUCERS" REVIEW OF SCIENTIFIC INSTRUMENTS, AIP, MELVILLE, NY, US, Bd. 67, Nr. 1, Januar 1996 (1996-01), Seiten 112-128, XP000554511 ISSN: 0034-6748

## Beschreibung

Die vorliegende Erfindung betrifft einen Sensor, insbesondere einen Mikrosensor, zur Detektion elektromagnetischer Strahlung, deren Wellenlänge insbesondere im oder nahe am Bereich des Infraroten liegt. Der Sensor weist eine mit einem die Strahlung selektiv absorbierenden Fluid oder einem Gel gefüllte Messkammer auf, wobei die Strahlung über ein Eintrittsfenster in die Messkammer eintritt und wobei das Fluid oder das Gel auf die Absorption der Strahlung mit einer Dichteänderung reagiert, die zu einer Volumenänderung führt.

Ein nach einem ähnlichen Prinzip funktionierender Sensor ist aus der DE 197 18 732 A1 bekannt. Dieser hat einen beispielsweise auch von einem Fluid gebildeten Absorber, der für bestimmte Wellenlängen selektiv ist. Die Volumenänderung des Fluids wird durch einen Mechanosensor gemessen, der die Volumenänderung in eine Längenänderung und dann in ein elektrisches Signal umwandelt. Wegen des selektiven Absorbermaterials ist die Empfindlichkeit dieses Sensors relativ hoch. Sein komplexer Aufbau steht jedoch einer Massenfertigung und vor allem einer Miniaturisierung hinunter in einen Bereich unter 1 mm entgegen.

Das US 4,634,870 zeigt einen IR-Sensor mit einer gasgefüllten Zelle, deren Rückseite von einer Membran bedeckt ist. Einfallende IR-Strahlung erwärmt das Gas in der Zelle, das sich entsprechend ausdehnt und die Membran messbar wölbt. Eine ähnliche Art von IR-Sensor ist in der GB 1415078 und dem US 4,788,428 gezeigt.

In Kenny T. W. et al: "Micromachined infrared sensors using tunneling discplacement transducers" Review of Scientific Instruments, American Institute of Physics, Melville, NY, US, Bd. 67, Nr. 1, Januar 1996 wird ein einfallende IR-Strahlung detektierender Mikrosensor in Form einer miniaturisierten Golay-Zelle beschrieben.

Aus dem GB 1 111 712 A ist ein flüssigkeitsgefüllter Sensor bekannt. Die Flüssigkeit befindet sich in einer Hohlkammer des Sensors, die in einem nach oben offenen Steigrohr endet. Eine Erwärmung der Flüssigkeit bei einfallender IR-Strahlung führt zu deren Ausdehnung, die an dem Steigrohr abgelesen werden kann.

Zudem sind Bolometer und pyroelektrische Detektoren bekannt. Im Gegensatz zu den ebenfalls bekannten Halbleitersensoren müssen diese nicht gekühlt werden. Bei dieser Art von Sensoren wird die durch die absorbierte Infrarotstrahlung erzeugte Temperaturänderung eines Absorberelementes direkt in eine elektrische Größe umgewandelt. Als Absorber wird im Falle der Bolometer Vanadiumoxyd bzw. ferroelektrisches Barium-Stronzium-Titanat oder aber amorphes Silizium eingesetzt. Prinzipiell wird mit dem eingesetzten Absorberelement eine möglichst große Änderung des elektrischen Widerstandes mit einer Temperaturänderung angestrebt.

Im Gegensatz zu Bolometern nutzen pyroelektrische Sensoren den sogenannten pyroelektrischen Effekt, bei dem sich mit einer Temperaturänderung die spontane Polarisation eines ferroelektrischen Kristalls ändert. Dadurch kommt es zu einer Ladungsbildung an den äußeren Kristallflächen. Als pyroelektrische Sensoren sind außerdem sogenannte Wechsellichtsensoren bekannt, bei denen einfallende Strahlung, beispielsweise durch einen Chopper, in der Intensität moduliert wird.

Die Empfindlichkeit D der bekannten ungekühlten thermischen Sensoren liegt bei höchstens D* = 10⁹ cm Hz^{½} / W. Dabei weisen diese Sensoren eine weitgehende Unabhängigkeit ihrer Empfindlichkeit von der Wellenlänge der einfallenden Infrarotstrahlung auf. Im Vergleich zu gekühlten Halbleitersensoren ist die Empfindlichkeit der thermischen Sensoren um zwei bis drei Größenordnungen kleiner. Durch Filter wird eine Selektivität bezüglich bestimmter Wellenlängen erreicht, wobei die Filter allerdings die Kosten erhöhen und die Empfindlichkeit beeinträchtigen.

Im Gegensatz zu den Halbleitersensoren ist ein wesentlicher Nachteil der anderen Sensoren, dass sie auf Änderungen der Umgebungstemperatur empfindlich reagieren und daher bei konstanter Temperatur betrieben werden müssen. Dieses Erfordernis verlangt den Einbau entsprechender Mittel zur Temperatureinstellung, was die Produktionskosten wiederum erhöht. Zur Steigerung der Empfindlichkeit können die Sensoren in ein Vakuumgehäuse eingebaut werden, was ebenfalls die Produktionskosten steigert und die Lebensdauer insbesondere beim Einsatz in einer besonders rauen Betriebsumgebung reduziert. Ein eklatanter Nachteil ist daher neben der relativ geringen Sensitivität, dass thermische Sensorarrays für breite Massenanwendungen zu teuer sind. Ein Nachteil der pyroelektrischen Sensoren ist auch, dass sie ihre für die Infrarotsensorik interessanten Eigenschaften mit abnehmender Dicke verlieren, was einer Miniaturisierung im Wege steht.

Die Aufgabe der Erfindung liegt nun darin, einen einfach aufgebauten, robusten und kostengünstig herzustellenden Mikrosensor zu schaffen, der mit einfachen Mitteln ohne Kühlung bzw. Temperaturkonstanz betreibbar ist und mit dem sich insbesondere Infrarotstrahlung mit hoher Sensitivität aufnehmen lässt.

Diese Aufgabe wird durch einen Mikrosensor mit den Merkmalen des Anspruch 1 gelöst. Besonders vorteilhafte Ausführungsformen des erfindungsgemäßen Mikrosensors sind in der Unteransprüchen aufgeführt.

Zunächst liegt ein Grundgedanke der Erfindung darin, wesentliche Komponenten des Sensors in einem durch entsprechende Mikrosystemtechnik zu bearbeitenden Substrat unterzubringen und die Füllhöhe des Fluids oder des Gels innerhalb eines insbesondere als Kapillare ausgebildeten Steigrohres zu messen, das mit der Messkammer in Verbindung steht. Dabei bildet die Füllhöhe in dem Steigrohr eine Flüssigkeitssäule aus, deren Höhe in einem unmittelbaren Zusammenhang mit der Volumenänderung des Fluids steht. Wegen der verhältnismäßig starren Kammerwände ist die Volumenänderung eine Folge der Druckveränderung im Fluid, das sich im Steigroher ausdehnt. Erfindungsgemäß wird die Messkammer von einer in das Substrat eingebrachten Ausnehmung gebildet, die auf ihrer "aktiven" Seite von einer das Eintrittsfenster bildenden Fensterschicht bedeckt ist, wobei die Fensterschicht für die zu messende Strahlung durchgängig ist.

Zur Messung der sich in dem Steigrohr verändernden Füllhöhe des Fluids ist ein insbesondere elektrisch oder optisch arbeitendes Mittel vorgesehen. Besonders vorteilhaft ist es, wenn das Fluid ein Elektrolyt, insbesondere eine ionische Flüssigkeit, mit relativ geringem Dampfdruck ist, wobei das Fluid insofern an die Charakteristika der zu messenden Strahlung angepasst sein sollte, als es diese Strahlung möglichst selektiv absorbiert. Dabei werden als ionische Flüssigkeiten solche Flüssigkeiten bezeichnet, die ausschließlich Ionen enthalten. Es handelt sich also um flüssige Salze, ohne dass das Salz dabei in einem Lösungsmittel, wie Wasser gelöst ist. Ionische Flüssigkeiten sind Salze, die bereits bei Temperaturen unter 100 °C flüssig sind.

Der besondere Vorteil dieses Mikrosensors ist, dass er von hoher Sensitivität ist und vor allem in einer nachfolgend zu beschreibenden Ausführungsform keiner Temperaturkonstanz bedarf. Außerdem kann er tatsächlich in mikroskopischen Dimensionen von wenigen Mikrometern gebaut werden, wobei die Abmessungen nach unten nur durch die Eindringtiefe der Strahlung in die Messkammer begrenzt sind. Insofern können Mikrosensoren für Infrarotstrahlung mit Kammervolumina bis unter 1000 fl insbesondere bis hinunter zu etwa 10 fl gebaut werden, wenn es die Art der Herstellung ermöglicht. Dabei ist es besonders vorteilhaft, wenn die Ausdehnung der Kammer in der Größenordnung der Eindringtiefe der Strahlung liegt, wobei diese in dem speziell gewählten Fluid zwischen 1 - 10 Mikrometer sein sollte. Somit ist es auch ein wesentlicher Gedanke der Erfindung, die Art des Fluids in Verbindung mit der Dimensionierung der Kammer entsprechend so zu wählen, dass die sich hinter dem Eintrittsfenster erstreckende Kammertiefe weniger als der zehnfachen insbesondere weniger als der fünffachen Eindringtiefe der in das Fluid eintretenden Strahlung entspricht.

Zur Beeinflussung der Absorbtionseigenschaften ist es vorteilhaft, wenn in die mit Fluid oder Gel befüllte Messkammer gut absorbierendes Festkörpermaterial eingebracht ist, das insbesondere in Form kleiner Einzelpartikel oder in einer schwamm- oder netzartigen Struktur vorliegt.

Als Herstellungstechnik bieten sich die bekannten lithographische Verfahren an. Dabei ist es besonders vorteilhaft, wenn das Substrat von einem Siliziumwafer gebildet wird und die Komponenten insbesondere die Messkammer und/oder das Steigrohr als Ausnehmungen durch einen lithographischen Ätzprozess in den Siliziumwafer und/oder in darauf aufgebrachte Schichten eingebracht werden. Es sei an dieser Stelle betont, dass das Steigrohr keine von der Messkammer räumlich getrennte Leitung sein muss, sondern vorteilhafterweise von einer kaminartigen Verjüngung der Messkammer selber gebildet wird, die auf der dem Eintrittsfenster gegenüberliegenden Seite vorgesehen ist. Das Steigrohr kann als Bohrung in einer separaten und auf das Substrat aufgebrachten Isolierschicht eingeracht sein. So kann ein besonders einfacher Herstellungsprozess durch die genannten lithographischen Techniken gewährleistet werden.

Die Funktion des Steigrohres und dessen einfache Anfertigung werden dadurch verbessert, dass das Steigrohr über dem von der Oberfläche der Flüssigkeitssäule ausgebildeten Meniskus eine Öffnung mit kleinem Durchmesser aufweist.. Dabei ist der Durchmesser der Öffnung verhältnismäßig klein, insbesondere im Bereich von weniger als einem Mikrometer, so dass eine gegebene Volumenänderung des Fluids zu einer möglichst großen Änderung der Füllhöhe führt. Eine derartige Dimensionierung ist durch die Herstellung des Sensors vermittels eines lithographischen Verfahrens möglich.

Ein weiterer wesentlicher Vorteil des in das Substrat eingebrachten Mikrosensors ist auch, dass Messkammem einer Vielzahl solcher Sensoren gemeinsam in das Substrat eingebracht und die Sensoren so zu einem Array zusammengefasst werden können. Dabei ist die selektive Auslese der Sensoren besonders einfach über aufgedampfte Leiter zu bewerkstelligen. Mit solchen Sensorarrays können dann Bilder von Strahlungsverteilungen aufgenommen werden. Außerdem kann mit einem Array eine Richtungssensibilität erreicht werden, wenn Bereiche des Arrays in Winkeln und damit richtungsselektiv angeordnet sind.

Ein ganz wesentlicher Gesichtspunkt der Erfindung liegt in einer ein Reservoir bildenden Ausgleichskammer, die mit der Messkammer "kommuniziert". Dazu ist sie über eine Ausgleichskapillare mit der Messkammer verbunden und ebenfalls mit dem Fluid befüllt. Die Funktion der Ausgleichskammer liegt darin, eine durch Strahlungseinfall beispielsweise durch eine langsame Temperaturschwankung induzierte langsame Druck- und Volumenerhöhung aufzunehmen und somit zu kompensieren. Damit sie nicht selber der strahlungsinduzierten Druckerhöhung ausgesetzt ist, wird die Ausgleichskammer vor dem Eintritt der zu messenden Strahlung geschützt. Die Ausgleichskammer ist vorteilhafterweise von wesentlich größerem Volumen als die Messkammer. Über dem in der Ausgleichskammer befindlichen Fluid sollte Umgebungsdruck herrschen, was vermittels einer darüber befindlichen Öffnung bewerkstelligt wird. Mit einem solchen Sensor sind schnelle Strahlungs- und damit Volumenschwankungen unter einer Sekunde, insbesondere im Bereich von Mikrosekunden, messbar, wobei langsame Schwankungen der Temperatur vermittels der Ausgleichskammer kompensiert werden.

Für das zur Messung des sich in dem Steigrohr verändernden Füllstandes vorgesehene Mittel sind verschiedene Konzepte möglich: Beispielsweise kann der Füllstand elektrisch gemessen werden. Auch eine optische Messung ist möglich und gerade im Fall von Sensorarrays vorteilhaft. Ein elektrisch arbeitendes Mittel kann innerhalb des Steigrohrs eine Arbeitselektrode und eine Gegenelektrode aufweisen, wobei die Elektroden so angeordnet sind, dass sich das Fluid zwischen ihnen befindet. Insbesondere kann zumindest die Arbeitselektrode als eine in das Steigrohr eintauchende Tauchelektrode ausgebildet sein, so dass die durch den Füllstand ergebende Volumenänderung die benetzte Fläche der Arbeitselektrode ändert. Mit der Änderung der benetzten Fläche ändern sich entsprechend die elektrischen Eigenschaften, insbesondere die Kapazität, des Systems. Diese Änderung kann dann mit bekannten Mitteln gemessen werden.

Das Auslesen eines Arrays vom Mikrosensoren kann auch optisch erfolgen. Dazu werden die Mündungsöffnungen der nach oben offenen Steigrohre mit Licht bestrahlt. Wenn sich über der Mündungsöffnung eines Steigrohres die Wölbung des verdrängten Fluids erhebt, wird daran das Licht reflektiert und gelangt in einen darüber angeordneten Kamerachip. Diese Art der Auslese wird später in dem Ausführungsbeispiel beschrieben.

Generell verfügt ein solcher erfindungsgemäßer Mikrosensor über zwei für ungekühlte Sensoren besonders bemerkenswerte Eigenschaften: So ist, wie schon dargelegt, durch die Konzeption der Ausgleichskammer eine automatische Kompensation von langsamen Änderungen der Umgebungstemperatur gegeben. Damit können mechanische und/oder akustische Störeinflüsse unterdrückt werden. Wegen der Kompensation ist eine Konstanz der Detektortemperatur nicht notwendig. Mit solchen Sensoren ist ein Sensorarray beispielsweise für eine Wärmebildkamera mit geringen Herstellungskosten und geringem Energiebedarf herstellbar. Ein einzelnes Sensorelement hat zudem den Vorteil einer hohen Empfindlichkeit und kann ohne ein zusätzliches umgebendes Vakuumgehäuse betrieben werden. Gegenüber den bekannten Sensoren entfällt die Notwendigkeit komplexer Konstruktionen, was zu einer wesentlichen Vereinfachung der Produktion und somit zu einer weiteren Kostensenkung führt.

Derartige Mikrosensoren sind beispielsweise für den Einsatz in Nachtsichtgeräten insbesondere für Automobile oder Flugzeuge geeignet und können bei der Überwachung von industriellen Produktionsprozessen, beim Feuerwehreinsatz, bei medizinischen und tiermedizinischen Diagnostiken, bei der Minensuche in Nachtsichtgeräten für militärische und zivile Einsätze verwendet werden.

Die Herstellung des nachfolgend im ersten Ausführungsbeispiel dargestellten Sensors bedient sich der folgenden Schritte: Zunächst wird ein etwa 100 Mikrometer starker Siliziumwafer mit einer etwa fünf Mikrometer starken Isolatorschicht aus Siliziumnitrat (SiN) bedampft. In den Siliziumwafer werden zwei Ausnehmungen eingeätzt, wobei die eine Ausnehmung als Messkammer und die andere als Ausgleichskammer dient. Beide Kammern sind über eine ebenfalls eingeätzte Ausgleichskapillare miteinander verbunden. In dem speziellen Ausführungsbeispiel hat die Messkammer einen Durchmesser von etwa 100 Mikrometern. In einem weitern Schritt wird auf diesen so vorbereiteten Wafer eine dünne Pyrex- oder Siliziumschicht aufgebondet, die als Infrarotfenster dient.

In einem nachfolgendem Schritt werden in die verbleibende Siliziumnitratmembran oberhalb der Messkammer und des Reservoirs jeweils Öffnungen eingeätzt, wobei über der Messkammer zwei Öffnungen verschiedener Durchmesser vorgesehen sind. Die kleinere der beiden Öffnungen wird von einer nachfolgend aufgebrachten Metallschicht verschlossen und bildet die Gegenelektrode, da das in der Messkammer befindliche Fluid an der Metallschicht anliegt. Die Arbeitselektrode wird von der zylindrischen Ausnehmung die mit Metall verkleidet ist und einen Durchmesser von etwa 3 Mikrometern hat gebildet. Die Messkammer wird über die Ausgleichskammer mit Hilfe von Kapillarkräften und möglicherweise angelegtem Vakuum gefüllt.

Die Funktion des Mikrosensors lässt sich folgendermaßen beschreiben: Da der Durchmesser der Arbeitselektrode kleiner ist als die Ausnehmung über der Ausgleichskammer, bildet das Fluid in der Arbeitselektrode einen Meniskus aus, der sich selber zu einem Gleichgewichtszustand innerhalb der Arbeitselektrode justiert. Dieser Prozess geschieht wegen des verzögerten Austausches des Fluids zwischen Messkammer und Ausgleichskammer über die dünne Ausgleichkapillare relativ langsam. Die in die Messkammer einstrahlende Infrarotstrahlung wird nun selektiv von dem in der Messkammer befindlichen Fluid absorbiert. Der damit verbundene Temperaturanstieg führt zu einer Expansion des Fluids, die ihrerseits in einem Anstieg des Meniskus innerhalb der Arbeitselektrode resultiert. Dieser Anstieg kann über die Änderung der Kapazität zwischen den beiden Elektroden aufgenommen werden. Dabei wird die Kapazität vermittels eines kleinen Wechselstromes zwischen den Elektroden gemessen.

Da das Fluid Ionen enthält, ist der für die Kapazität der Anordnung bestimmende Faktor die Größe der in das Fluid eingetauchten Fläche. Die Kapazität für die ionische Helmholzschicht auf der Elektrode ist mit ungefähr 0,5 F/m² relativ groß, so dass Kapazitäten von etwa 10 pF für Elektroden dieser Dimension zu erwarten sind. Der Vorteil eines solchen Mikrosensors ist, dass langsame Wechsel der Hintergrundstemperatur unterdrückt werden durch den ausgleichenden Effekt des selbstjustierenden Meniskus.

Das Steigrohr hat vorteilhafterweise einen Durchmesser von einem Mikrometer und damit eine aktive Fläche von etwa 0,78 Mikrometer². Die aus diesen Parametern zu erwartende Expansion bei einem Temperaturunterschied von 2 mK liegt bei etwa 0,09 Mikrometer³. Das würde einen Anstieg des Meniskus in der Kapillare von etwa 0,11 Mikrometern entsprechen. Ein solcher Anstieg des Meniskus geht mit einer Änderung der Kapazität zwischen den Elektroden von etwa 0,08 pF einher. Ein solcher Sensor hat eine standardisierte Empfindlichkeit von > 10⁸. Der NEDT (noise äquivalent change and temperature) liegt unter 20 mK. Ein solcher Sensor lässt sich vorteilhafter weise bei Umgebungstemperatur betreiben. Er hat eine immanente Hintergrundkorrektur.

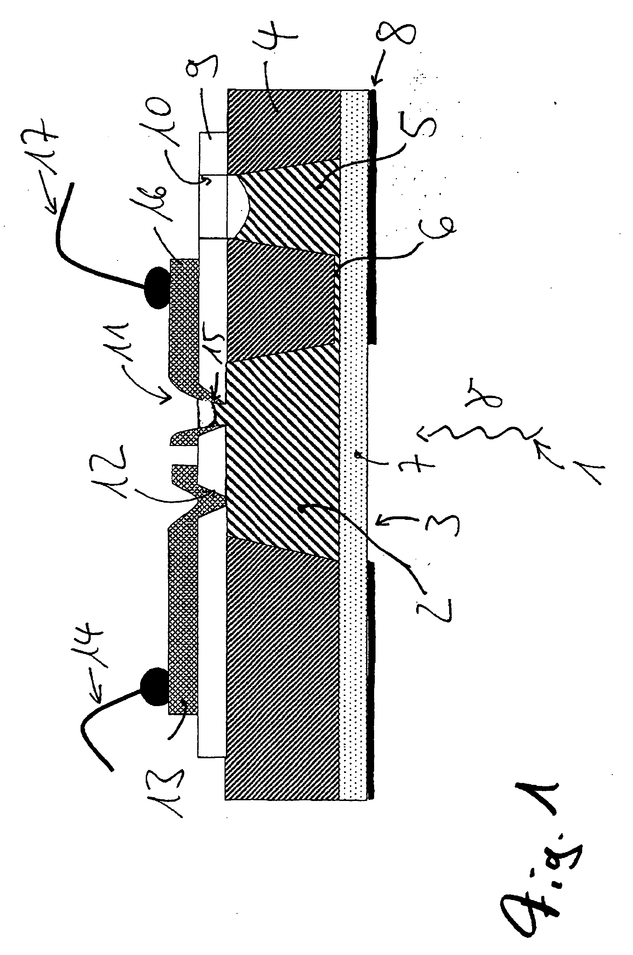

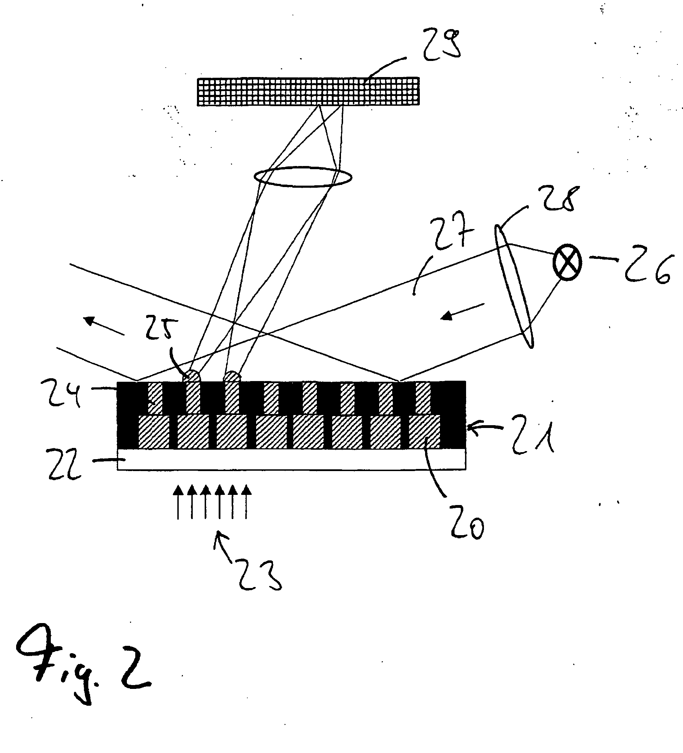

Nachfolgend werden zwei Ausführungsformen der Erfindung anhand der Figuren 1 und 2 näher erklärt. Es zeigen:
- **Figur 1**: einen Schnitt durch einen elektrisch ausgelesenen Mikrosensor und
- **Figur 2**: ein optisch ausgelesener Mikrosensor.

In der Figur 1 wird der Schnitt durch einen Mikrosensor zur Detektion von Infrarotstrahlung 1 gezeigt. Dieser weist eine mit einem die Infrarotstrahlung 1 selektiv absorbierenden Fluid (grob liniert) gefüllte Messkammer 2 auf. Die Messkammer 2 wird von einer mittels Lithographie in ein Siliziumsubstrat 4 von weniger als 100 Mikrometern Stärke eingebrachten Ausnehmung gebildet, die das Substrat 4 durchdringt. Auf das Substrat 4 ist eine Fensterschicht 7 aus Pyrex oder Silizium gebondet, die etwa 10 Mikrometer stark ist. Mit Ausnahme des Eintrittsfensters 3 ist die Fensterschicht 7 von einer Abdeckschicht 8 bedeckt. Die Strahlung 1 tritt von der "aktiven" Seite (unten) her über ein Eintrittsfenster 3 in die Messkammer 2 ein, wobei das Fluid auf die Absorption der Strahlung 1 mit einer Dichteänderung reagiert, die zu einer Volumenänderung führt.

Ebenfalls in das Substrat 4 eingebracht ist eine Ausgleichskammer 5, die mit der Messkammer 2 über eine Ausgleichskapillare 6 verbunden und ebenfalls mit dem Fluid befüllt ist. Die Ausgleichskapillare 6 ist als flache Rinne in das Substrat 4 eingeätzt. Die durch das Substrat hindurchgehende Ausgleichskammer 5 ist wie die Messkammer 2 gefertigt und durch die Abdeckschicht 8 gegen das Eindringen der Strahlung geschützt.

Auf die gegenüberliegende Seite ist das Substrats 4 von einer Isolatorschicht 9 bedeckt, in der über der Ausgleichskammer 5 eine Befüllöffnung 10 vorgesehen ist. Über die Befüllöffnung 10 ist die Ausgleichskammer 5 dem Umgebungsdruck ausgesetzt. Auch über der Messkammer sind in der Isolatorschicht 9 zwei Öffnungen 11 und 12 vorgesehen, wobei die Öffnungen 11 das Steigrohr ausbildet, während die Öffnungen 12 durch eine auf die Isolatorschicht 9 aufgedampfte Metallschicht 13 verschlossen ist. Über die Öffnung 12 kontaktiert das Fluid die Metallschicht 13, die eine Gegenelektrode bildet und an der eine Leitung 14 angelötet ist. Zudem ist eine Metallschicht 16 auf die Isolatorschicht 9 aufgebracht, die eine Arbeitselektrode bildet und als Tauchelektrode in das Steigrohr 11 hineinreicht und das Fluid kontaktiert, wobei die Metallschicht 16 mit einer Leitung 17 verbunden ist. Die Metallschichten 13 und 15 sind Goldschichten von wenigen Mikrometern Stärke, die auf die Isolatorschicht 9 aufgesputtert sind.

Bei einer Druckerhöhung in der Messkammer 2 steigt der Meniskus 15 des Fluids und es ändert sich die benetzte Fläche der Arbeitselektrode. Dies wiederum ändert die Kapazität des von den beiden Elektroden gebildeten Kondensators auf eine über die Leitungen 14 und 17 messbare Weise.

In Figur 2 ist eine Ausführungsform eines Sensorarrays schematisch gezeigt, die sich einer optischen Auslese bedient: Durch das optische Verfahren kann auf die aufwendige Ausleseelektronik verzichtet werden, die bei einem elektrisch ausgelesenen Array benötigt würde um jedes Sensorelement getrennt anzusteuern. Zur Vereinfachung sind in diesem Beispiel nur die einzelnen Messkammem 20 gezeigt, die in das Substrat 21 eingebracht sind. Über die Fensterschicht 22 tritt Infrarotstrahlung nur in einige (hier zwei) Messkammern 20. In den bestrahlten Messkammem 20 dehnt sich das Fluid aus und bildet über den Steigrohren 24 kleine Erhebungen 25. Ein von einer Lichtquelle 26 ausgehender Lichtstrahl 27 wird in einer Linse 28 gebündelt trifft in einem Einfallswinkel auf die Oberfläche des Sensorarrays und wird entsprechend in einem Ausfallswinkel reflektiert. Trifft der Lichtstrahl 27 auf die Erhebungen 25 wird er in einem anderen Winkel reflektiert und trifft nach Fokussierung in einen Kamerachip 29 (CCD). Im Kamerachip 29 werden einzelne Pixel entsprechend der Verteilung der IR-Strahlung beleuchtet und stellen ein entsprechendes Bild dar.

Das System wird somit als "Bildwandler" vom Infraroten in den sichtbaren Wellenlängenbereich betrieben. Mittels dieses Zwischenschrittes über ein optisches Signal können Bildauflösungen realisiert werden, die beim elektrischen Auslesen nicht möglich sind.

## Patentansprüche

1. Mikrosensor zur Detektion von elektromagnetischer Strahlung (1), deren Wellenlänge insbesondere im oder nahe am Bereich des Infraroten liegt, aufweisend
- ein Substrat (4);
- eine mit einem die Strahlung selektiv absorbierenden Fluid oder einem Gel gefüllte Messkammer (2), die von einer in das Substrat (4) eingebrachten Ausnehmung gebildet ist;
- eine Fensterschicht (7), die auf der aktiven Seite die Ausnehmung bedeckt;
wobei die Fensterschicht (7) ein Eintrittsfenster (3) bildet;
wobei die Strahlung über das Eintrittsfenster (3) in die Messkammer (2) eintritt, wobei das Fluid oder das Gel auf die Absorption der Strahlung (1) mit einer Dichteänderung reagiert, die zu einer Volumenänderung führt;
- ein mit der Messkammer (2) in Verbindung stehendes Steigrohr (11), in dem das Fluid oder das Gel eine in der Höhe veränderliche Säule ausbildet;
wobei das Steigrohr (11) über dem von der Oberfläche der Säule ausgebildeten Meniskus (15) offen ist;
- ein Mittel zur Messung der Höhe;
- eine ein Reservoir bildende Ausgleichskammer (5), die ebenfalls von einer in das Substrat (4) eingebrachten Ausnehmung gebildet ist; und
- eine Ausgleichskapillare;
wobei die Ausgleichskammer (5) mit der Messkammer (2) über die Ausgleichskapillare (6) verbunden und ebenfalls mit dem Fluid oder dem Gel befüllt ist;
wobei die Ausgleichskammer eine Öffnung hat, wodurch über dem Fluid oder dem Gel Umgebungsdruck herrscht; und
wobei die Ausgleichskammer (5) vor dem Eintritt der zu messenden Strahlung (1) geschützt ist.

2. Mikrosensor nach Anspruch 1,
**dadurch gekennzeichnet,**
**dass** das Steigrohr als Kapillare ausgebildet ist.

3. Mikrosensor nach Anspruch 1 oder 2,
**dadurch gekennzeichnet,**
**dass** die Messkammer (2) und das Steigrohr (11) mittels eines lithographischen Verfahrens in das insbesondere von einem Siliziumwafer gebildete Substrat (4), eingebracht ist.

4. Mikrosensor nach Anspruch 1 oder 2,
**dadurch gekennzeichnet,**
**dass** das Steigrohr (11) von einer kaminartigen Verjüngung der Messkammer (2) gebildet wird, die auf der dem Eintrittsfenster (3) gegenüberliegenden Seite vorgesehen ist.

5. Mikrosensor nach einem der vorherigen Ansprüche,
**dadurch gekennzeichnet,**
**dass** die sich hinter dem Eintrittsfenster (3) erstreckende Tiefe der Messkammer (2) und die Art des Fluids oder des Gels derart gewählt sind, dass die Tiefe weniger als der zehnfachen insbesondere weniger als der fünffachen Eindringtiefe der in das Fluid oder in das Gel eintretenden Strahlung (1) entspricht.

6. Mikrosensor nach einem der vorherigen Ansprüche,
**dadurch gekennzeichnet,**
**dass** die Messkammer (2) ein Messvolumen der Größe von weniger als 1000 fl, insbesondere von weniger als 100 fl, aufweist.

7. Mikrosensor nach einem der vorherigen Ansprüche,
**dadurch gekennzeichnet,**
**dass** die in das in Substrat (4) eingebrachte Messkammer (2) auf der der aktiven Seite gegenüberliegenden Seite von einer Isolatorschicht (9) bedeckt ist.

8. Mikrosensor nach Anspruch 7,
**dadurch gekennzeichnet,**
**dass** die Isolatorschicht (9) über der Ausgleichskammer (5) und über dem Steigrohr (11) jeweils eine Öffnung aufweist, wobei die Öffnung (10) über der Ausgleichskammer (5) zum Befüllen und zum Druckausgleich dient.

9. Mikrosensor nach einem der vorherigen Ansprüche,
**dadurch gekennzeichnet,**
**dass** das Substrat (4) eine Stärke von weniger als 200 Mikrometern insbesondere von weniger als 100 Mikrometern aufweist.

10. Mikrosensor nach einem der vorherigen Ansprüche,
**dadurch gekennzeichnet,**
**dass** die Fensterschicht (7) aus Pyrex oder Silizium besteht und wenige 10 Mikrometer Stärke aufweist, wobei die Fensterschicht (7) auf das Substrat (4) gebondet ist.

11. Mikrosensor nach einem der vorherigen Ansprüche,
**dadurch gekennzeichnet,**
**dass** die Ausgleichskammer (5) und die Ausgleichskapillare (6) ebenfalls in das Substrat (4) eingebracht, insbesondere eingeätzt, sind.

12. Mikrosensor nach einem der vorherigen Ansprüche,
**dadurch gekennzeichnet,**
**dass** das Mittel zur Messung der Steighöhe innerhalb des Steigrohrs (11) eine Arbeitselektrode (16) und eine Gegenelektrode (13) aufweist, wobei sich das Fluid oder das Gel zwischen den Elektroden (13,16) befindet, wobei zumindest die Arbeitselektrode (16) als eine in das Steigrohr (11) eintauchende Tauchelektrode ausgebildet ist, wobei die Volumenänderung die benetzte Fläche der Arbeitselektrode (16) ändert.

13. Mikrosensor nach Anspruch 12,
**dadurch gekennzeichnet,**
**dass** die Elektroden (13,16) jeweils von einer Metallschicht, insbesondere einer Goldschicht, von wenigen Mikrometern Stärke gebildet werden, die auf die Isolatorschicht (9) aufgesputtert ist.

14. Mikrosensor nach einem der vorherigen Ansprüche,
**dadurch gekennzeichnet,**
**dass** das Fluid eine ionische Flüssigkeit ist.

15. Mikrosensor nach einem der vorherigen Ansprüche,
**dadurch gekennzeichnet,**
**dass** in die mit Fluid oder Gel befüllte Messkammer (2) ein die Strahlung absorbierendes Festkörpermaterial eingebracht ist, das insbesondere in Form kleiner Einzelpartikel oder in einer schwamm- oder netzartigen Struktur vorliegt.

16. Substrat insbesondere Siliziumwafer mit einer Vielzahl von Mikrosensoren nach einem der vorherigen Ansprüche, die ein Sensorarray ausbilden.

17. Verfahren zur Auslese eines Sensorarrays nach Anspruch 16,
**dadurch gekennzeichnet,**
**dass** ein von einer Lichtquelle (26) ausgehender Lichtstrahl (27) in einem Einfallswinkel auf die Oberfläche des Sensorarrays eingestrahlt wird und dass das an Erhebungen (25) reflektierte Licht über einen Kamerachip (29) aufgenommen wird.

## Claims

1. A microsensor for the detection of electromagnetic radiation (1), whose wavelength lies in particular in or near the infrared region, having
- a substrate (4);
- a measurement chamber (2) filled with a fluid or gel selectively absorbing the radiation, which chamber is formed from a cavity introduced into the substrate (4);
- a window layer (7), which on the active side covers the cavity; wherein
the window layer (7) forms an entry window (3); wherein
the radiation enters the measurement chamber (2) via the entry window (3), wherein the fluid or gel reacts to the absorption of the radiation (1) with an alteration in density, which leads to an alteration in volume;
- a riser tube (11) connected with the measurement chamber (2), in which the fluid or gel forms a column that varies in height; wherein
the riser tube (11) is open above the meniscus (15) formed by the surface of the column;
- a means for the measurement of the height;
- a compensation chamber (5) forming a reservoir, which likewise is formed from a cavity introduced into the substrate (4); and
- a compensation capillary; wherein
the compensation chamber (5) is connected with the measurement chamber (2) via the compensation capillary (6), and is likewise filled with the fluid or gel; wherein
the compensation chamber has an opening, whereby ambient pressure prevails above the fluid or gel; and wherein
the compensation chamber (5) is protected from entry of the radiation (1) to be measured.

2. The microsensor in accordance with Claim 1,
**characterised in that**
the riser tube is designed as a capillary.

3. The microsensor in accordance with Claims 1 or 2,
**characterised in that**
the measurement chamber (2) and the riser tube (11) are introduced by means of a lithographic method into the substrate (4), which is in particular formed from a silicon wafer.

4. The microsensor in accordance with Claims 1 or 2,
**characterised in that**
the riser tube (11) is formed from a chimney-like tapering of the measurement chamber (2), which is provided on the side opposite to the entry window (3).

5. The microsensor in accordance with one of the preceding claims,
**characterised in that**
the depth of the measurement chamber (2) extending behind the entry window (3), and the type of fluid or gel, are selected such that the depth corresponds to less than ten times, in particular less than five times, the penetration depth of the radiation (1) entering the fluid or gel.

6. The microsensor in accordance with one of the preceding claims,
**characterised in that**
the measurement chamber (2) has a measurement volume of a size less than 1000 fl, in particular less than 100 fl.

7. The microsensor in accordance with one of the preceding claims,
**characterised in that**
the measurement chamber (2) introduced into the substrate (4) is covered on the side opposite to the active side by an insulation layer (9).

8. The microsensor in accordance with Claim 7,
**characterised in that**
the insulation layer (9) has an opening above the compensation chamber (5) and an opening above the riser tube (11), wherein the opening (10) above the compensation chamber (5) serves for purposes of filling and pressure compensation.

9. The microsensor in accordance with one of the preceding claims,
**characterised in that**
the substrate (4) has a thickness of less than 200 microns, in particular of less than 100 microns.

10. The microsensor in accordance with one of the preceding claims,
**characterised in that**
the window layer (7) consists of Pyrex or silicon, and has a thickness of less than 10 microns, wherein the window layer (7) is bonded onto the substrate (4).

11. The microsensor in accordance with one of the preceding claims,
**characterised in that**
the compensation chamber (5) and the compensation capillary (6) are likewise introduced, in particular etched, into the substrate (4).

12. The microsensor in accordance with one of the preceding claims,
**characterised in that**
the means for the measurement of the rise height within the riser tube (11) has a working electrode (16) and a counter electrode (13), wherein the fluid or gel is located between the electrodes (13, 16), wherein at least the working electrode (16) is designed as an immersion electrode dipping into the riser tube (11), wherein the alteration in volume alters the wetted surface of the working electrode (16).

13. The microsensor in accordance with Claim 12,
**characterised in that**
the electrodes (13, 16) are in each case formed from a metal layer, in particular a gold layer, of a few microns in thickness, which is sputtered onto the insulation layer (9).

14. The microsensor in accordance with one of the preceding claims,
**characterised in that**
the fluid is an ionic fluid.

15. The microsensor in accordance with one of the preceding claims,
**characterised in that**
a solid body material absorbing the radiation is introduced into the measurement chamber (2) filled with fluid or gel, which solid body material in particular is present in the form of small individual particles, or in a sponge-type or network-type structure.

16. A substrate, in particular a silicon wafer, with a multiplicity of microsensors in accordance with one of the preceding claims, which form a sensor array.

17. A method for the readout of a sensor array in accordance with Claim 16,
**characterised in that**
a light beam (27) emerging from a light source (26) is irradiated at an angle of incidence onto the surface of the sensor array, and **in that** light reflected from protuberances (25) is registered via a camera chip (29).

## Revendications

1. Microcapteur pour la détection de rayonnement (1) électromagnétique, dont la longueur d'onde se situe en particulier dans ou à proximité de la plage de l'infrarouge, présentant
- un substrat (4) ;
- une chambre de mesure (2) remplie d'un fluide absorbant le rayonnement de façon sélective ou d'un gel, qui est formé par un évidement introduit dans le substrat (4) ;
- une couche fenêtre (7), qui recouvre l'évidement sur le côté actif ;
la couche fenêtre (7) formant une fenêtre d'entrée (3) ;
le rayonnement entrant par la fenêtre d'entrée (3) dans la chambre de mesure (2), le fluide ou le gel réagissant à l'absorption du rayonnement (1) avec une modification de la densité, qui entraine une variation de volume ;
- un tuyau montant (11) en liaison avec la chambre de mesure (2), dans lequel le fluide ou le gel forme une colonne variable en hauteur ;
le tuyau montant (11) étant ouvert sur le ménisque (15) formé par la surface de la colonne ;
- un moyen pour la mesure de la hauteur ;
- une chambre de compensation (5) formant un réservoir, qui est formée également par un évidement introduit dans le substrat (4) ; et
- un tube capillaire de compensation ;
la chambre de compensation (5) étant reliée à la chambre de mesure (2) par le tube capillaire de compensation (6) et étant remplie également avec le fluide ou le gel ;
la chambre de compensation ayant une ouverture par laquelle la pression ambiante règne au-dessus du fluide ou du gel ; et
la chambre de compensation (5) étant protégée avant l'entrée du rayonnement (1) à mesurer.

2. Microcapteur selon la revendication 1,
**caractérisé en ce que**
le tuyau montant est conçu sous forme de tube capillaire.

3. Microcapteur selon la revendication 1 ou 2,
**caractérisé en ce que**
la chambre de mesure (2) et le tuyau montant (11) sont introduits au moyen d'un procédé lithographique dans le substrat (4) formé en particulier par une tranche de silicium.

4. Microcapteur selon la revendication 1 ou 2,
**caractérisé en ce que**
le tuyau montant (11) est formé par un rétrécissement en forme de cheminée de la chambre de mesure (2), qui est prévu sur le côté opposé à la fenêtre d'entrée (3).

5. Microcapteur selon l'une quelconque des revendications précédentes,
**caractérisé en ce que**
la profondeur, s'étendant derrière la fenêtre d'entrée (3), de la chambre de mesure (2) et la nature du fluide ou du gel sont choisies de telle sorte que la profondeur correspond à moins du dixième ou en particulier moins du cinquième de la profondeur de pénétration du rayonnement (1) entrant dans le fluide ou dans le gel.

6. Microcapteur selon l'une quelconque des revendications précédentes,
**caractérisé en ce que**
la chambre de mesure (2) présente un volume de mesure de la grandeur de moins de 1000 fl, en particulier de moins de 100 fl.

7. Microcapteur selon l'une quelconque des revendications précédentes,
**caractérisé en ce que**
la chambre de mesure (2) introduite dans le substrat (4) est recouverte par une couche isolante (9) sur le côté opposé au côté actif.

8. Microcapteur selon la revendication 7,
**caractérisé en ce que**
la couche isolante (9) présente à chaque fois une ouverture au-dessus de la chambre de compensation (5) et au-dessus du tuyau montant (11), l'ouverture (10) au-dessus de la chambre de compensation (5) servant au remplissage et à l'équilibre de pression.

9. Microcapteur selon l'une quelconque des revendications précédentes,
**caractérisé en ce que**
le substrat (4) présente une épaisseur de moins de 200 microns, en particulier de moins de 100 microns.

10. Microcapteur selon l'une quelconque des revendications précédentes,
**caractérisé en ce que**
la couche fenêtre (7) est à base de pyrex ou de silicium et présente moins de 10 microns d'épaisseur, la couche fenêtre (7) étant bondérisée sur le substrat (4).

11. Microcapteur selon l'une quelconque des revendications précédentes,
**caractérisé en ce que**
la chambre de compensation (5) et le tube capillaire de compensation (6) sont introduits également dans le substrat (4), en particulier introduits par décapage.

12. Microcapteur selon l'une quelconque des revendications précédentes,
**caractérisé en ce que**
le moyen pour la mesure de la hauteur de montée à l'intérieur du tuyau montant (11) présente une électrode de travail (16) et une contre-électrode (13), le fluide ou le gel se trouvant entre les électrodes (13, 16), au moins l'électrode de travail (16) étant conçue sous forme d'une électrode immergée plongeant dans le tuyau montant (11), la variation de volume modifiant la surface occupée de l'électrode de travail (16).

13. Microcapteur selon la revendication 12,
**caractérisé en ce que**
les électrodes (13, 16) sont formées à chaque fois par une couche métallique, en particulier une couche d'or, de quelques microns d'épaisseur, qui est déposée par pulvérisation sur la couche isolante (9).

14. Microcapteur selon l'une quelconque des revendications précédentes,
**caractérisé en ce que**
le fluide est un liquide ionique.

15. Microcapteur selon l'une quelconque des revendications précédentes,
**caractérisé en ce que**
un matériau solide absorbant le rayonnement est introduit dans la chambre de mesure (2) remplie de fluide ou de gel, lequel matériau est présent en particulier sous forme de petites particules individuelles ou dans une structure spongieuse ou réticulaire.

16. Substrat, en particulier tranche de silicium comprenant une pluralité de microcapteurs selon l'une quelconque des revendications précédentes, qui forme un réseau capteur.

17. Procédé pour sélectionner un système capteur selon la revendication 16,
**caractérisé en ce que**
un faisceau de lumière (27) partant d'une source de lumière (26) est envoyé dans un angle d'incidence sur la surface du réseau capteur et **en ce que** la lumière réfléchie sur des élévations (25) est réceptionnée au moyen d'une puce de caméra (29).
